# FASCICULE DE BREVET EUROPEEN

(11) **EP 2 560 130 B1**
(45) Date de publication et mention de la délivrance du brevet: **01.04.2015**
(21) Numéro de dépôt: 12180014.8
(22) Date de dépôt: 10.08.2012
(51) Int. Cl.: G06K 19/067

(54) **Procédé d'interrogation d'un capteur de type acoustique à ondes de surface**
Abfrageverfahren eines akustischen Oberflächenwellensensors
Method for querying an acoustic sensor with surface waves

(30) Priorité: 17.08.2011 FR 1157381
(43) Date de publication de la demande: 20.02.2013
(73) Titulaire: Senseor, 06250 Mougins (FR)
(72) Inventeur: Ballandras, Sylvain, 25000 Besancon (FR); Friedt, Jean-Michel, 25000 Besancon (FR); Retornaz, Thibault, 25620 l'Hôpital du Gros-Bois (FR)
(74) Mandataire: Esselin, Sophie

(56) Documents cités:
- EP-A1- 1 585 056
- US-A1- 2010 117 804

## Description

La présente invention concerne un procédé d'interrogation d'un capteur de type acoustique à ondes de surface. La présente invention concerne également un dispositif mettant en oeuvre un tel procédé. Elle s'applique notamment au recueil de mesures réalisées par des capteurs de type acoustique à ondes de surface réalisant la mesure d'au moins un paramètre physique, et par extension à l'identification de ceux-ci ainsi que de tout type de composants de type acoustique à ondes de surface.

Les composants de type acoustique à ondes de surface, communément désignés composants "SAW", suivant l'acronyme correspondant à la terminologie anglaise "Surface Acoustic Wave", sont présents dans de nombreuses applications. Par exemple, ils peuvent constituer des dispositifs de filtrage radiofréquence, notamment dans des systèmes de télécommunication ; ils peuvent également constituer des dispositifs d'identification par radiofréquences ou "RFID" suivant l'acronyme désignant la terminologie anglaise "RadioFrequency IDentification", et former des étiquettes d'identification ou "tags" ; ils peuvent également constituer des capteurs de différents paramètres physiques, tels que la température ou la pression. Les capteurs physiques SAW peuvent assurer simultanément les fonctions de tags RFID et de capteurs physiques. Pour la suite, il sera fait référence à un "capteur SAW" pour désigner indifféremment un capteur physique SAW, un tag RFID ou un composant SAW assurant ces deux fonctions.

Les capteurs SAW présentent l'avantage de pouvoir être interrogés à distance, mais également de ne pas requérir une alimentation en énergie pour une telle interrogation. Pour la suite, il sera fait référence à l'interrogation d'un capteur SAW, pour désigner indifféremment le recueil des informations relatives à son identification et/ou à la mesure d'un paramètre physique. D'une manière typique, les capteurs SAW peuvent être réalisés par le dépôt de motifs métalliques, sur un substrat composé d'un matériau piézoélectrique, par exemple du quartz (SiO₂), du niobate de lithium (LiNbO₃) ou du tantalate de lithium (LiTaO₃). Les structures ainsi formées peuvent d'une manière typique comprendre un résonateur, par exemple constitué de transducteurs interdigités, autour desquels sont répartis des réflecteurs et des électrodes. Des signaux électromagnétiques radiofréquences peuvent entraîner la génération d'une onde élastique de surface, par exemple une onde de Rayleigh, par les transducteurs, l'onde élastique se propage alors au sein du réseau d'électrodes et de réflecteurs, et les transducteurs réémettent alors un signal radiofréquence qui peut être capté par une antenne, et analysé par des moyens appropriés. La configuration de ces structures permet d'influer sur la propagation de l'onde de surface et de définir ainsi des caractéristiques typiques de réponse des capteurs SAW à des signaux déterminés, par exemple à une impulsion de courte durée modulée par un signal radiofréquence. Un capteur SAW peut ainsi être conçu de manière à offrir une réponse impulsionnelle qui lui est propre, définissant sa signature en réponse impulsionnelle. Un exemple de capteur SAW offrant de bonnes performances, notamment en termes de sensibilité aux variations de fabrication, est celui de la ligne à retard réflexive, dans laquelle un transducteur et plusieurs groupes de réflecteurs ou d'électrodes sont disposés en surface du substrat piézoélectrique selon l'axe de propagation de l'onde. La distance entre chaque groupe de réflecteurs et le transducteur multipliée par 2, le trajet étant un trajet aller-retour, divisée par la vitesse de phase de l'onde correspond au retard ainsi induit. En outre, des paramètres physiques tels que la température ou la pression, peuvent influer sur la vitesse de phase et la distance de propagation entre réflecteur et transducteur et donc modifier le retard défini plus haut : une analyse plus précise de l'allure temporelle du signal faisant écho par exemple à une impulsion, permet ainsi de quantifier un paramètre physique, dès lors que la caractéristique coefficient de sensibilité du retard / valeur quantifiée du paramètre physique est connue. Lorsque le paramètre physique mesuré est la température, cette caractéristique est par exemple représentée par le coefficient de température du retard de propagation des ondes de surface. D'une manière générale, il sera pour la suite fait référence au terme de coefficient de paramètre physique du retard de propagation des ondes de surface.

Un choix judicieux de l'architecture du capteur SAW et notamment des matériaux utilisés, par exemple conjointement à l'utilisation de plusieurs capteurs fournissant une mesure différentielle, peut permettre la mesure sélective d'un paramètre physique donné, par exemple la température, en dépit de l'influence simultanée de différents paramètres physiques.

Des moyens connus peuvent permettre une analyse de signal suffisamment performante aux fins de l'identification d'un capteur SAW et/ou du recueil de la mesure du paramètre physique réalisée par celui-ci. En revanche, l'identification et/ou le recueil de mesure d'un capteur SAW peut s'avérer délicate, lorsque plusieurs capteurs SAW sont à proximité d'un dispositif d'interrogation. En effet, le dispositif d'interrogation reçoit alors, par exemple en écho d'un signal impulsionnel, un signal qui comprend les signaux de réponse impulsionnelle des différents capteurs SAW, ceux-ci pouvant être emmêlés au point de rendre très difficile la discrimination des signaux émanant des différents capteurs. Le document US 2010/117804 décrit un procédé d'interrogation d'un capteur de type acoustique à ondes de surface réalisant une mesure d'au moins un paramètre physique.

Des solutions connues de l'état de la technique mettent en oeuvre des procédés complexes d'analyse de signal permettant de dissocier les signaux. Une méthode connue est fondée sur le codage de phase, et est décrite dans la demande de brevet publiée sous la référence WO 2004/038637. Cependant de telles solutions présentent l'inconvénient de requérir des moyens de calcul relativement coûteux. Selon une autre méthode connue, il est possible de gérer la collision de code par orthogonalité. Cependant, suivant cette méthode, les normes relatives aux bandes de fréquences désignées ISM, suivant le sigle désignant la terminologie anglaise "Industrial, Scientific, Medical", pouvant s'appliquer préférentiellement aux capteurs SAW, ne sont pas respectées, et il n'est pas permis d'émettre des signaux au-delà d'une certaine quantité d'énergie dans le domaine spectral.

Selon d'autres solutions en elles-mêmes connues de l'état de la technique, les signatures des différents capteurs SAW auxquels un dispositif d'interrogation peut être confronté, peuvent être définies suivant des algorithmes facilitant leur dissociation par des moyens d'analyse du signal. Cependant de telles solutions présentent l'inconvénient de rendre plus complexe la réalisation des capteurs SAW, et de limiter le nombre de signatures possibles suivant une technologie de réalisation donnée.

Un but de la présente invention est de pallier au moins les inconvénients précités, en proposant un procédé de recueil d'une mesure d'un paramètre physique réalisée par un capteur SAW, permettant de restituer la mesure de manière robuste, sans requérir la mise en oeuvre de traitements d'analyse particulièrement coûteux et gourmands en temps de calcul.

Un avantage de l'invention est qu'elle permet en outre d'identifier les capteurs SAW parmi une population, même nombreuse, de capteurs SAW présents à proximité d'un dispositif interrogateur.

A cet effet, l'invention a pour objet un procédé d'interrogation d'un capteur de type acoustique à ondes de surface réalisant une mesure d'au moins un paramètre physique, **caractérisé en ce qu'**il comprend une première étape de génération et d'émission d'un signal électromagnétique correspondant au retournement temporel dilaté temporellement d'un coefficient de dilatation k, d'une signature en réponse impulsionnelle caractéristique dudit capteur acoustique correspondant au signal reçu du capteur en écho à un signal déterminé de type impulsionnel, une deuxième étape de recueil d'un signal reçu en écho du signal émis lors de la première étape, une troisième étape de détermination de la valeur maximale de l'amplitude ou de la puissance dudit signal reçu en écho lors de la deuxième étape, ladite première étape étant appliquée en une nouvelle itération avec un coefficient de dilatation k augmenté ou diminué d'un pas de valeur déterminée, jusqu'à ce que ladite valeur maximale atteigne une valeur maximale, la mesure dudit au moins un paramètre physique étant alors déterminée par le coefficient de dilatation k pour lequel la valeur maximale est maximale, et un coefficient dudit paramètre physique du retard de propagation des ondes de surface caractéristique dudit capteur acoustique.

Dans un mode de réalisation de l'invention, le coefficient de dilatation k peut être varié sur toute la gamme correspondant aux valeurs du paramètre physique à mesurer, la valeur maximale de la valeur maximale de l'amplitude ou de la puissance dudit signal reçu en écho étant déterminée à partir de toutes les valeurs recueillies sur la gamme des valeurs du coefficient de dilatation k.

Dans un mode de réalisation de l'invention, la valeur maximale de la valeur maximale de l'amplitude ou de la puissance dudit signal reçu en écho peut être déterminée pour le coefficient de dilatation k correspondant à une itération pour laquelle le taux de variation de la valeur maximale de l'amplitude ou de la puissance du signal reçu en écho entre ladite itération et l'itération précédente est de signe opposé au taux de variation de la valeur maximale de l'amplitude ou de la puissance du signal reçu en écho entre ladite itération précédente et l'itération la précédant.

Dans un mode de réalisation de l'invention, le procédé d'interrogation peut être réalisé pour toutes les signatures en réponse impulsionnelle d'un ensemble de capteurs acoustiques connus, de sorte qu'une identification des capteurs acoustiques présents puisse être réalisée, un capteur acoustique étant identifié lorsque la valeur maximale normalisée de l'amplitude ou de la puissance du signal reçu en écho lors de la deuxième étape est supérieure à une valeur de seuil prédéterminée.

Dans un mode de réalisation de l'invention, le procédé d'interrogation peut comprendre en outre une première étape préalable de recueil du signal en réponse à un signal d'émission déterminé, et une seconde étape préalable d'analyse du signal recueilli permettant l'identification d'un ou plusieurs capteurs acoustiques, ledit procédé étant alors réalisé pour les signatures en réponse impulsionnelle des capteurs acoustiques connus ainsi identifiés lors de ladite seconde étape préalable d'analyse du signal recueilli.

Dans un mode de réalisation de l'invention, le procédé d'interrogation peut comprendre en outre une étape préalable d'élaboration d'une base de données de capteurs acoustiques, consistant à collecter pour l'ensemble des capteurs acoustiques connus aptes à être interrogés, et pour une valeur déterminée d'au moins un paramètre physique, la caractéristique du signal émis par lesdits capteurs acoustiques en réponse à un signal déterminé de type impulsionnel.

Dans un mode de réalisation de l'invention, ladite valeur de seuil prédéterminée peut être une valeur supérieure à 70%.

La présente invention a également pour objet un dispositif d'interrogation d'au moins un capteur de type acoustique à ondes de surface, **caractérisé en ce qu'**il met en oeuvre un procédé selon l'un quelconque des modes de réalisation décrits, ledit dispositif d'interrogation comprenant une antenne d'émission reliée à un module de mise en forme des signaux radiofréquence relié à un synthétiseur de signaux radiofréquence assurant la mise en oeuvre de ladite première étape, une antenne de réception reliée à un module d'amplification et de filtrage, mettant en oeuvre ladite deuxième étape, l'augmentation ou la diminution du coefficient de dilatation temporelle d'un pas déterminé jusqu'à ce que ladite valeur maximale de l'amplitude ou de la puissance retournée atteigne une valeur maximale pour une valeur du coefficient de dilatation R optimale, le module d'amplification et de filtrage étant relié à un module d'analyse radiofréquence mettant en oeuvre ladite troisième étape et déterminant ladite mesure dudit au moins un paramètre physique à partir du coefficient de dilatation k poul lequel la valeur maximale est maximale, et un coefficient dudit paramètre physique du retard de propagation des ondes de surface caractéristique dudit capteur acoustique.

L'invention a également pour objet un dispositif mettant en oeuvre un procédé selon l'un quelconque des modes de réalisation de l'invention faisant l'objet des revendications de la présente demande de brevet.

D'autres caractéristiques et avantages de l'invention apparaîtront à la lecture de la description suivante, donnée à titre d'exemple, faite en regard des dessins annexés qui représentent :
- la figure 1, un logigramme illustrant un procédé d'interrogation d'un capteur SAW réalisant la mesure d'un paramètre physique, selon un exemple de réalisation de l'invention ;
- la figure 2, un logigramme illustrant un procédé d'interrogation tel qu'illustré par la figure 1, permettant en outre l'identification de capteurs SAW présents et le recueil de la mesure des paramètres physiques réalisée par ceux-ci, selon un exemple de réalisation de l'invention ;
- la figure 3, un logigramme illustrant un procédé tel que décrit par la figure 2, comprenant en outre une étape préalable d'élaboration d'une base de données de capteurs SAW, selon un exemple de réalisation de l'invention ;
- la figure 4, un schéma illustrant de manière synoptique, un exemple de dispositif mettant en oeuvre un procédé selon un des modes de réalisation de la présente invention ;
- la figure 5, des courbes illustrant la réponse d'une ligne à retard, à un signal radiofréquence de type impulsionnel ;
- la figure 6, des courbes illustrant la réponse d'une ligne à retard, à un signal radiofréquence correspondant au retournement temporel du signal de réponse impulsionnelle de la ligne à retard, selon un exemple de réalisation de l'invention.

Selon la présente invention, il est proposé d'utiliser le principe de retournement temporel aux fins d'interrogation de capteurs SAW. La présente invention se fonde sur une exploitation d'une propriété des transducteurs à ondes élastiques, réalisant naturellement un produit de convolution entre leur fonction de transfert et le signal de l'onde incidente. Dès lors, le signal reçu en écho d'une émission d'un signal correspondant au retournement temporel de la réponse impulsionnelle d'un transducteur à ondes élastiques, correspond à une fonction d'intercorrélation entre la réponse impulsionnelle du transducteur, et une réponse impulsionnelle de celui-ci connue à l'avance, et par exemple mémorisée.

Le principe de retournement temporel en lui-même connu de l'état de la technique, est à la base de différentes techniques connues, permettant notamment de localiser des structures denses, telles que par exemple des calculs rénaux, dans un milieu biologique, et d'y focaliser de l'énergie afin de les détruire. Le retournement temporel est également exploité dans le domaine de l'imagerie acoustique, dans le but d'améliorer le contraste, c'est à dire le rapport signal à bruit, d'images échographiques, et plus prosaïquement de déterminer avec précision des cibles précises dans des milieux à forte diffusion, dans lesquels existe une répartition aléatoire d'obstacles acoustiques. Des techniques fondées sur le principe de retournement temporel s'appliquent également aux ondes électromagnétiques, et permettent notamment de réaliser des focalisations afin de transmettre des messages radiofréquence entre plusieurs systèmes, typiquement équipés d'antennes, en garantissant un gain en rapport signal à bruit par rapport aux méthodes classiques de détection / transmission directe, ainsi qu'une grande sélectivité, dans le sens où elles permettent qu'une antenne donnée capte exclusivement les signaux qui lui sont destinés, alors qu'une antenne même voisine ne capte pas ces mêmes signaux.

D'une manière typique, un procédé de retournement temporel comprend une étape consistant à recueillir l'écho produit par un système physique en conséquence d'une stimulation impulsionnelle initiale, suivie d'une étape consistant à réémettre l'écho recueilli, après l'avoir retourné dans le temps. En conséquence de cette dernière émission, le système réémet alors l'impulsion initiale. Le principe de retournement temporel repose sur l'invariance de l'équation de propagation d'ondes par renversement temporel.

Selon la présente invention, il est proposé d'émettre en direction d'un système, un signal électromagnétique correspondant au retournement temporel de la signature en réponse impulsionnelle caractéristique d'un capteur SAW à interroger. La signature en réponse impulsionnelle caractéristique d'un capteur SAW est le signal reçu en écho d'un signal de type impulsionnel, par exemple un signal électromagnétique de haute fréquence d'amplitude élevée et émis sur une durée très courte, lorsque ce dernier est émis en direction du capteur SAW isolé, les paramètres physiques environnementaux du capteur SAW étant fixés arbitrairement. Une alternative pour l'identification de la réponse impulsionnelle d'un transducteur est le balayage en fréquences afin d'identifier la réponse (S₁₁) du transducteur sur une large bande puis d'effectuer la transformée de Fourier inverse pour obtenir la réponse impulsionnelle dans le domaine temporel.

De la sorte, un signal électromagnétique est réémis par le système - et notamment par le capteur SAW à interroger - en écho du signal retourné temporellement, et le signal d'écho peut être recueilli et analysé. Or, lorsque le capteur SAW à interroger est sensible à un paramètre déterminé, c'est-à-dire lorsque le capteur SAW réalise la mesure de ce paramètre physique, la dilatation temporelle du signal représentatif de sa réponse impulsionnelle varie en fonction de la valeur quantifiée du paramètre physique.

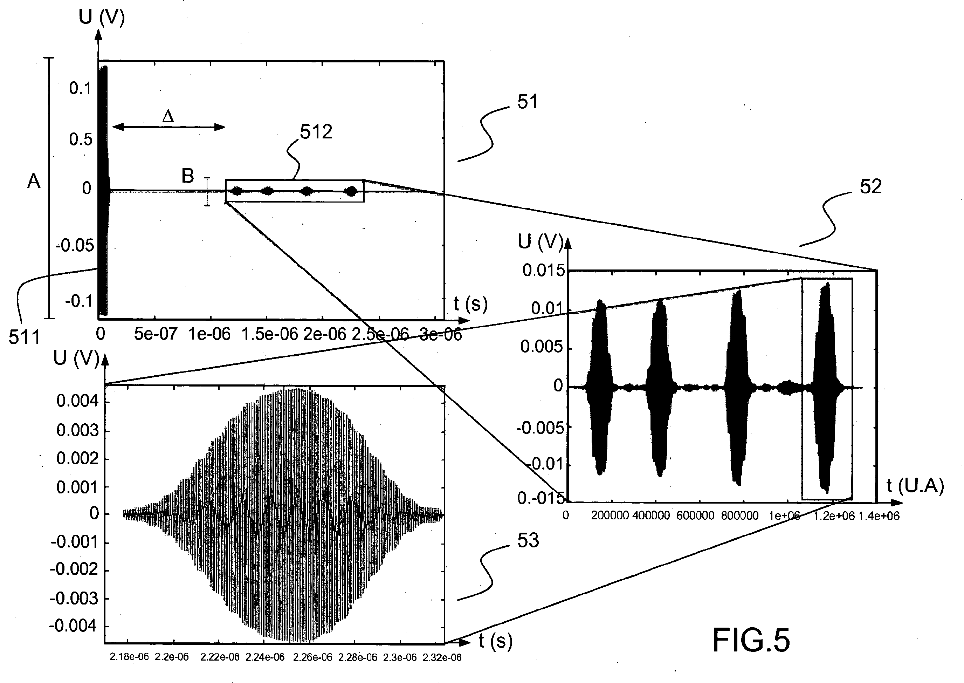

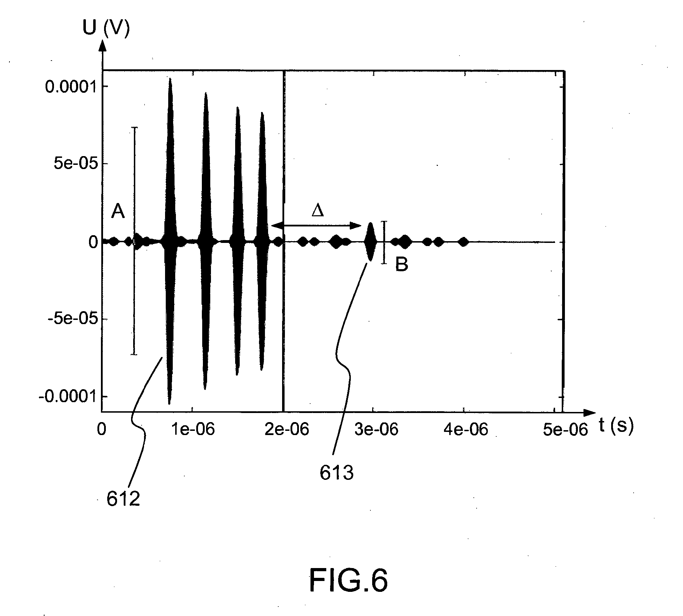

Des exemples de courbes représentatives de signaux émis et recueillis en écho, dans des exemples où le capteur SAW considéré est une ligne à retard, sont illustrés par les figures 5 et 6 décrites brièvement ci-après.

Le signal reçu en écho du système soumis aux variations du paramètre physique considéré est ainsi d'autant plus fortement corrélé avec le signal de type impulsionnel initial que le signal retourné temporellement présente une dilatation temporelle proche de la valeur quantifiée actuelle du paramètre physique auquel le capteur SAW est soumis.

Un principe fondamental de la présente invention consiste à faire varier la dilatation temporelle du signal retourné temporellement émis, par un balayage de valeurs d'un coefficient de dilatation temporelle dans une plage de valeurs correspondant à une plage des valeurs quantifiées du paramètre physique mesuré par le capteur SAW, et à analyser la valeur maximale de l'amplitude ou de la puissance du signal reçu en écho, correspondant au taux d'intercorrélation entre la réponse impulsionnelle du capteur et le signal de réponse impulsionnelle de celui-ci initialement déterminée. Ainsi lorsque le taux d'intercorrélation est maximal, la valeur du coefficient de dilatation temporelle correspondant peut permettre une détermination de la valeur quantifiée du paramètre physique mesuré par le capteur SAW, dès lors que la caractérisation de celui-ci, en termes de coefficient dudit paramètre physique du retard de propagation des ondes de surface, est connue.

Ainsi, il est possible de réaliser le procédé faisant l'objet de la présente invention, pour l'interrogation d'un capteur SAW dont les caractéristiques sont connues à l'avance, et dont la sensibilité au phénomène à mesurer se traduit principalement par une dilatation temporelle de sa réponse impulsionnelle.

Avantageusement, il est possible de réaliser le procédé pour l'interrogation d'une pluralité de capteurs SAW connus dont la présence dans l'environnement d'un dispositif interrogateur est connue à l'avance, en émettant les signaux retournés temporellement correspondant respectivement à toutes les signatures en réponse impulsionnelle caractéristiques des différents capteurs SAW à interroger : par exemple, il est possible d'interroger via un unique dispositif interrogateur, plusieurs capteurs SAW connus disposés dans un véhicule dont certains mesurent la température locale en des points critiques, d'autres mesurent la pression de pneumatiques, etc.

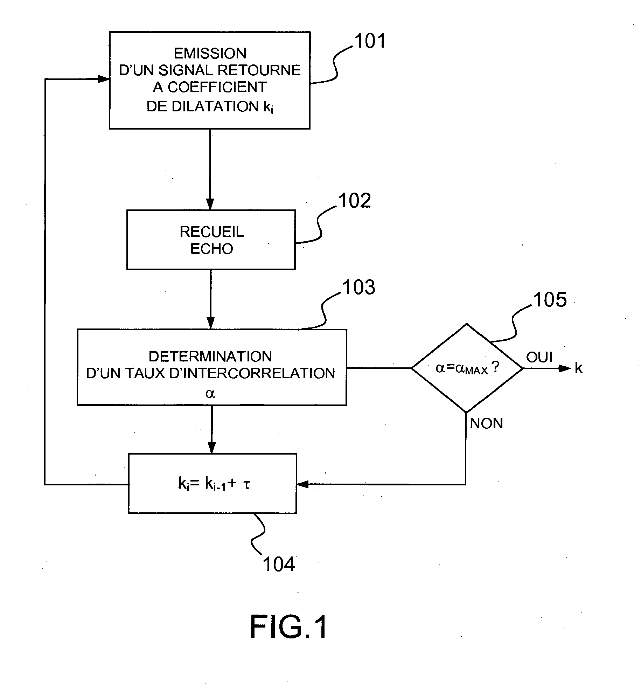

Avantageusement encore, il est possible de réaliser un procédé dans lequel une pluralité de signaux retournés temporellement correspondant respectivement à toutes les signatures en réponse impulsionnelle caractéristiques d'un ensemble de différents capteurs SAW potentiellement présents à proximité d'un dispositif interrogateur, sans que la présence ou l'absence de ces capteurs SAW ne soit connue à l'avance. De la sorte, il est possible de procéder à l'identification des capteurs SAW présents, ainsi qu'au recueil de la mesure de paramètres physiques qu'ils réalisent le cas échéant. Par exemple, il est possible de réaliser un tel procédé "en boucle", pour la détection, l'identification et le recueil de mesures de capteurs SAW à la portée d'un dispositif interrogateur, les signaux retournés temporellement correspondant à tous les capteurs SAW potentiellement présents étant émis à tour de rôle, le balayage des coefficients de dilatation temporelle étant réalisé pour chacun d'entre eux, la présence d'un capteur SAW pouvant par exemple être décrétée si le taux d'intercorrélation, c'est-à-dire la valeur maximale de l'amplitude ou de la puissance du signal reçu en écho, dépasse une valeur de seuil. Un tel mode de réalisation peut par exemple s'appliquer à la gestion dynamique d'un stock de marchandises, pour laquelle il peut être nécessaire d'identifier les marchandises disposées sur un tapis roulant, et passant à proximité d'un dispositif interrogateur, les marchandises étant équipées de tags RFID et potentiellement de capteurs physiques SAW. Les différents modes de réalisation évoqués ci-dessus sont décrits en détail ci-après, en référence aux figures 1 à 6.

La figure 1 présente un logigramme illustrant un procédé d'interrogation d'un capteur SAW réalisant la mesure d'un paramètre physique, selon un exemple de réalisation de l'invention.

Selon l'exemple de réalisation non limitatif de la présente invention illustré par la figure 1, un procédé de recueil de la mesure réalisée par un capteur SAW, par exemple disposé dans un système à proximité d'un dispositif d'interrogation, peut comprendre une première étape 101 consistant à émettre un signal électromagnétique correspondant au retournement temporel de la signature en réponse impulsionnelle du capteur SAW à interroger, suivie d'une deuxième étape 102 consistant à recueillir le signal reçu en écho. En une première itération, le signal électromagnétique peut être affecté d'un coefficient de dilatation temporelle initiale k₀. Le coefficient de dilatation temporelle initiale k₀ peut être par exemple celui qui définit une signature en réponse impulsionnelle du capteur SAW lorsque le paramètre physique a pour valeur la valeur quantifiée minimale dans la plage de mesure attendue.

Le signal ainsi recueilli peut alors être analysé lors d'une troisième étape 103, lors de laquelle une valeur maximale est déterminée. Cette valeur maximale correspond à la valeur maximale d'une fonction d'intercorrélation entre le signal s' reçu en écho lors de la deuxième étape 102, et le signal s initial de type impulsionnel ayant produit la signature en réponse impulsionnelle du capteur SAW. Cette valeur maximale correspond ainsi au taux d'intercorrélation.Un stockage de la valeur maximale précitée peut alors être réalisé, et une étape d'incrémentation du coefficient de dilatation temporelle 104 peut augmenter le coefficient de dilatation temporelle k₀ d'un pas τ de valeur déterminée, positive ou négative selon notamment le choix de la valeur initiale k₀ du coefficient de dilatation temporelle, le coefficient de dilatation temporelle prenant alors une valeur incrémentée k₁.

Le procédé peut alors recommencer en une deuxième itération, en reprenant à la première étape 101, lors de laquelle est alors émis un signal électromagnétique correspondant à la signature en réponse impulsionnelle du capteur SAW, affecté d'un coefficient de dilatation temporelle k₁, etc., les étapes du procédé étant déroulées en boucle, par exemple de sorte que le coefficient de dilatation temporelle k prenne toutes les valeurs kᵢ autorisant une couverture totale de la gamme de valeurs quantifiées du paramètre physique dont la mesure est réalisée par le capteur SAW.

Une étape de détermination de la valeur maximale 105 de la valeur maximale de l'amplitude ou de la puissance du signal reçu en écho précitée, peut alors permettre de déterminer la valeur du coefficient de dilatation temporelle kᵢ pour laquelle ladite valeur maximale est maximale.

Avantageusement, il peut ne pas être nécessaire de varier les valeurs du coefficient de dilatation temporelle kᵢ de manière à ce que ce dernier autorise une couverture totale de la gamme de valeurs à mesurer, et l'étape de détermination de la valeur maximale 105 de ladite valeur maximale de l'amplitude ou de la puissance du signal reçu en écho précitée peut par exemple comparer une valeur de la valeur maximale déterminée en une i-ième itération courante, à la valeur maximale déterminée en la (i-1)-ième itération précédente, et une sortie de boucle peut être réalisée, par exemple si la variation à la hausse ou à la baisse de la valeur maximale d'une itération à la suivante s'inverse, ou en d'autres termes si le coefficient de variation de la valeur maximale a changé de signe entre la (i-2)-ième itération et la (i-1)-ième itération et entre la (i-1)-ième itération et la i-ième itération.

Quelle que soit la méthode mise en oeuvre pour déterminer le maximum de corrélation, c'est-à-dire de la valeur maximale de l'amplitude ou de la puissance du signal reçu en écho, la valeur du coefficient de dilatation temporelle y correspondant permet de déterminer la valeur quantifiée du paramètre physique mesuré par le capteur SAW le cas échéant. Cette valeur peut être déterminée moyennant le coefficient du paramètre physique du retard de propagation des ondes de surface caractéristique du capteur SAW considéré.

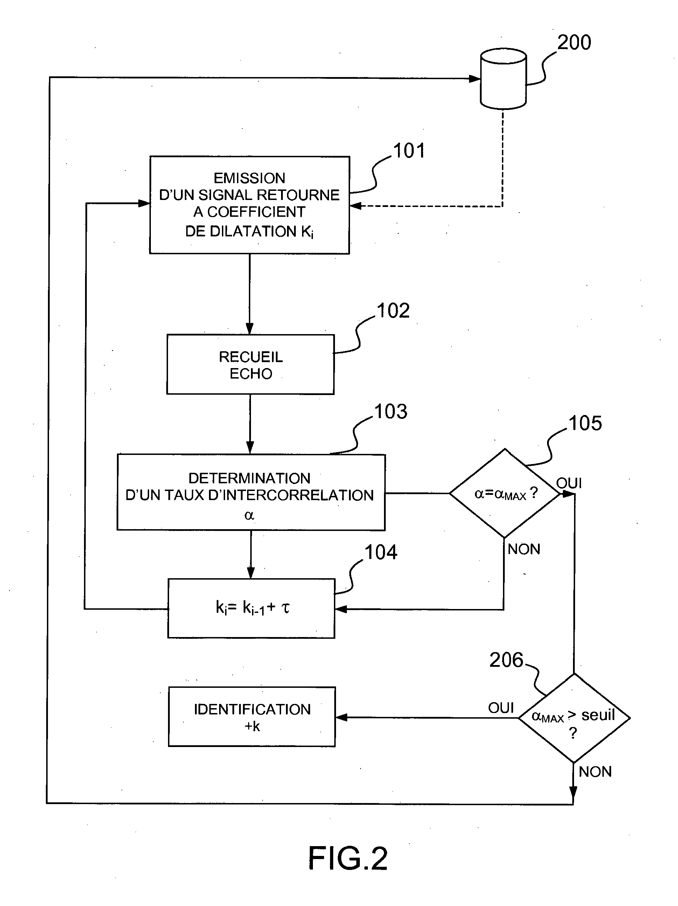

Avantageusement, il peut être procédé à l'identification des capteurs SAW présents, ainsi qu'au recueil de la mesure du paramètre physique qu'ils réalisent le cas échéant. La figure 2 décrite en détails ci-après en présente un exemple non limitatif de la présente invention.

La figure 2 présente un logigramme illustrant un procédé d'interrogation tel qu'illustré par la figure 1, permettant en outre l'identification de capteurs SAW présents et le recueil de la mesure des paramètres physiques réalisée par ceux-ci, selon un exemple de réalisation de l'invention.

Le procédé décrit dans la figure 2 comprend également les première, deuxième et troisième étapes 101, 102, 103 décrites précédemment en référence à la figure 1, ainsi que l'étape d'incrémentation du coefficient de dilatation temporelle 104 et l'étape de détermination de la valeur maximale 105 de la valeur maximale de l'amplitude ou de la puissance du signal reçu en écho.

Le procédé décrit dans la figure 2 peut par exemple être réalisé pour tous les signaux électromagnétiques (dilatés et retournés temporellement) correspondant aux signatures en réponse impulsionnelle d'un ensemble de capteurs SAW à interroger compris dans une base de données 200.

Une étape de comparaison d'un taux d'intercorrélation normalisé 206 peut être ajoutée, permettant de calculer un taux d'intercorrélation normalisé, par exemple à partir de la valeur maximale de l'amplitude ou de la puissance du signal reçu en écho précitée, divisée par la valeur maximale possible de celle-ci, et à comparer le taux d'intercorrélation normalisé avec une valeur de seuil prédéterminée. La valeur de seuil prédéterminée peut par exemple être choisie supérieure ou égale à 70%.

Si le taux d'intercorrélation normalisé est par exemple supérieur ou égal à la valeur de seuil prédéterminée, alors il peut être considéré que le capteur SAW correspondant est présent, et si celui-ci réalise une mesure d'un paramètre physique, celle-ci peut être déterminée sur la base de la valeur du coefficient de dilatation temporelle permettant de maximiser le taux d'intercorrélation, ainsi que décrit précédemment, moyennant le coefficient du paramètre physique du retard de propagation des ondes de surface caractéristique du capteur SAW considéré, cette donnée pouvant être comprise également dans la base de données.

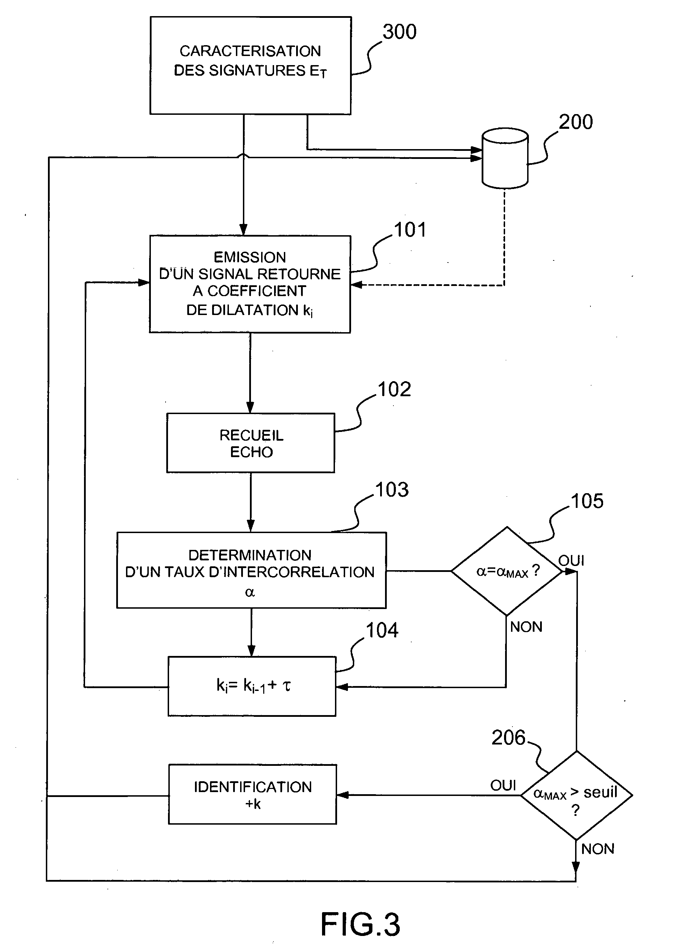

En d'autres termes, la base de données 200 comprend, pour tous les capteurs SAW auxquels un dispositif interrogateur peut être confronté, les signatures en réponse impulsionnelle de ceux-ci, ainsi que les informations relatives à leurs coefficients du paramètre physique du retard de propagation des ondes de surface caractéristiques respectifs. Le procédé d'interrogation selon un des exemples de réalisation décrits, peut comprendre en outre une étape préalable visant à construire la base de données 200, ainsi que cela est décrit ci-après en référence à un exemple non limitatif illustré par la figure 3.

Dans un mode de réalisation de l'invention, il est possible d'adjoindre au procédé d'interrogation, une première étape préalable de recueil du signal reçu en écho, en réponse à un signal d'émission déterminé par exemple de type impulsionnel, et une seconde étape préalable d'analyse du signal recueilli, par exemple selon une technique en elle-même connue d'interrogation de capteurs SAW . De la sorte, il peut être possible de réaliser une pré-identification d'un ou plusieurs capteurs acoustiques, et de ne réaliser ensuite le procédé tel que décrit précédemment que pour les signatures en réponse impulsionnelle des capteurs acoustiques connus ainsi identifiés, lors de la seconde étape préalable d'analyse du signal recueilli.

La figure 3 présente un logigramme illustrant un procédé tel que décrit par la figure 2, comprenant en outre une étape préalable d'élaboration d'une base de données de capteurs SAW, selon un exemple de réalisation de l'invention. Une connaissance préalable des caractéristiques des capteurs SAW interrogeables est en effet nécessaire.

Le procédé illustré par la figure 3 diffère du procédé illustré par la figure 2 et décrit ci-dessus, en ce qu'il présente une étape préalable 300 de caractérisation des capteurs SAW potentiellement interrogeables. L'étape préalable 300 peut consister à émettre en direction de chacun des capteurs SAW interrogeables pris isolément, un signal prédéterminé, par exemple de type impulsionnel, et de recueillir et stocker le signal E_{T} reçu en écho. L'étape préalable 300 peut être réalisée pour une valeur donnée du paramètre physique mesuré par le capteur SAW, par exemple pour une température T donnée. Les signaux recueillis peuvent par exemple être échantillonnés et les données correspondantes stockées dans la base de donnée 200 précitée.

Il est également possible de caractériser un capteur SAW autrement que par réponse impulsionnelle : par exemple par transformée de Fourier inverse de sa réponse spectrale, ou par tout autre moyen connu.

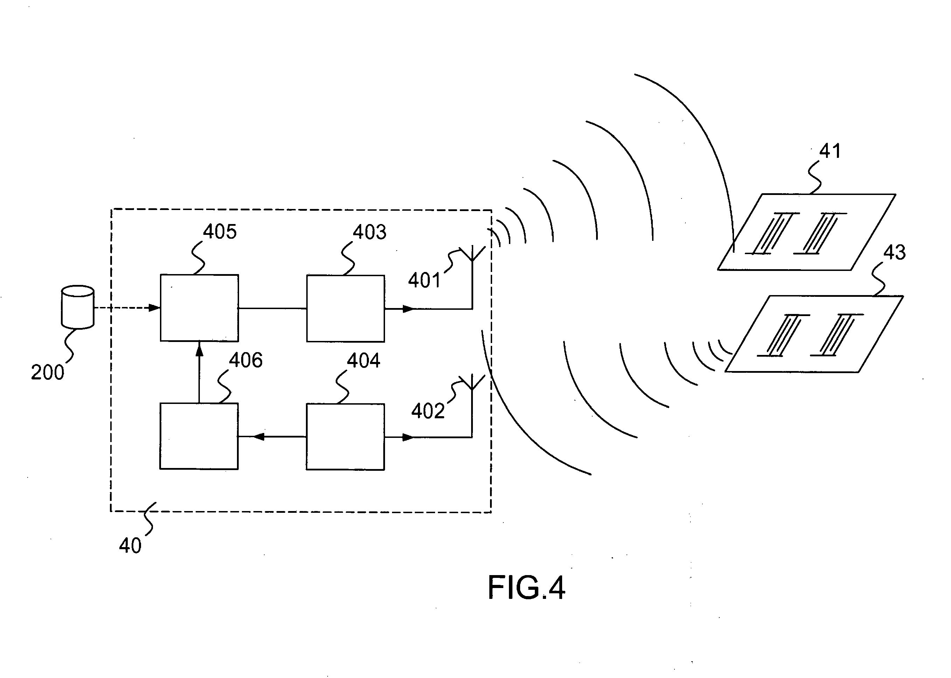

La figure 4 présente un schéma illustrant de manière synoptique, un exemple de dispositif mettant en oeuvre un procédé selon un des modes de réalisation de la présente invention.

La figure 4 présente un dispositif interrogateur 40 configuré pour émettre des signaux radiofréquence à destination de capteurs SAW 41, 43, dont deux sont représentés sur la figure. Le dispositif interrogateur 40 comprend une antenne d'émission 401 et une antenne de réception 402, les antennes d'émission et de réception 401, 402 pouvant par exemple être co-localisées.

L'antenne d'émission 401 est reliée à un module de mise en forme des signaux radiofréquence 403 assurant notamment la transposition en fréquence si besoin, et l'amplification des signaux générés par un synthétiseur radiofréquence 405. Le synthétiseur radiofréquence 405 qui permet la synthèse des signaux retournés temporellement décrits précédemment, est relié par exemple à la base de données 200, la base de données 200 pouvant être physiquement intégrée dans le synthétiseur radiofréquence 405. Ces différents éléments permettent ainsi la mise en oeuvre de la première étape des procédés décrits précédemment en référence aux figures 1 à 3.

Les signaux captés par l'antenne de réception 402 peuvent attaquer un module d'amplification et de filtrage 404. Le module d'amplification et de filtrage 404 peut être relié à un module d'analyse radiofréquence 406. L'antenne de réception 402 et le module d'amplification et de filtrage 404 permettent notamment la mise en oeuvre de la deuxième étape 102 de recueil de signaux en écho, décrite précédemment en référence aux figures 1 à 3, de la troisième étape de détermination d'un taux d'intercorrélation 103, l'étape d'incrémentation du coefficient de dilatation temporelle 104 et l'étape de détermination de la valeur maximale 105 du taux d'intercorrélation, ainsi que l'étape de comparaison du taux d'intercorrélation normalisé 206 décrite précédemment en référence aux figures 2 et 3, et l'étape préalable 300 de caractérisation des capteurs SAW interrogeables. Les différents calculs nécessaires à ces étapes peuvent par exemple être mis en oeuvre dans le module d'analyse radiofréquence 406, ou bien dans un module de calcul externe connecté au module d'analyse radiofréquence 406, non représenté sur la figure. Il est rappelé ici, ainsi que cela est évoqué précédemment, que le taux d'intercorrélation est directement issu de la valeur maximale de l'amplitude ou de la puissance du signal reçu en écho d'un capteur, à l'émission d'un retournement temporel d'un signal caractéristique de sa réponse impulsionnel : la présente invention n'implique par conséquent aucun calcul d'une fonction d'intercorrélation, l'intercorrélation étant réalisée naturellement par la capteur SAW, qui par construction réalise un produit de convolution du signal incident avec sa fonction de transfert.

La figure 5 présente des courbes illustrant la réponse d'une ligne à retard, à un signal radiofréquence de type impulsionnel.

La figure 5 présente une première représentation graphique 51 de la tension aux bornes de la ligne à retard formant capteur SAW dans l'exemple considéré, en fonction du temps. Une première impulsion haute fréquence 511, d'une fréquence de l'ordre de 2,4 GHz typique d'une bande ISM selon le sigle désignant le terme "Industrielle, Scientifique et Médicale" de forte amplitude A et de courte durée correspond à un signal émis de type impulsionnel. Une série de quatre impulsions 512 de moindre amplitude démarre après un délai Δ consécutivement à l'impulsion haute fréquence, dont la valeur d'amplitude moyenne est notée B, correspond à la signature en réponse impulsionnelle de la ligne à retard. Dans l'exemple illustré par la figure, le rapport entre les amplitudes A et B est de l'ordre de 20, et le délai Δ est de l'ordre d'une microseconde.

Une deuxième représentation graphique 51 présente un grossissement de la série de quatre impulsions 512, et une troisième représentation graphique présente un grossissement de la quatrième impulsion de la série de quatre impulsions 512.

La figure 6 présente des courbes illustrant la réponse d'une ligne à retard, à un signal radiofréquence correspondant au retournement temporel du signal de réponse impulsionnelle de la ligne à retard, selon un exemple de réalisation de l'invention.

Dans l'exemple illustré par la figure 6, une première série de quatre impulsions 612 correspond au retournement temporel dilaté temporellement d'un coefficient de dilatation égal à 1, du signal en réponse impulsionnelle de la ligne à retard, c'est-à-dire du signal figuré par la série de quatre impulsions 512 tel que décrit précédemment en référence à la figure 5.

Une deuxième série d'impulsions apparaît approximativement 1 µs après la fin de la première série de quatre impulsions 612, c'est-à-dire après un délai sensiblement égal au délai Δ précité, et correspond à la réponse typique d'un système comprenant la ligne à retard. La deuxième série d'impulsions est centrée sur un lobe principal 613 correspondant à un pic d'intercorrélation, autour duquel sont visibles des lobes secondaires.

Dans l'exemple illustré par la figure, le rapport entre l'amplitude moyenne de la première série de quatre impulsions 612, et l'amplitude du lobe principal 613, est de l'ordre de 5.

Il est à noter que la présente invention peut s'appliquer à l'interrogation de dispositifs composés de transducteurs et de réflecteurs formant une ligne à retard réflexive, ainsi qu'à tout dispositif combinant des peignes actifs électriquement ou n'opérant que comme réflecteur des ondes, susceptible de présenter une réponse impulsionnelle différentiable d'une population de capteurs/dispositifs selon cette même définition.

Plus généralement, la présente invention peut s'appliquer à tout dispositif à ondes élastiques présentant une réponse impulsionnelle.

La présente invention peut être avantageusement mise en oeuvre pour l'interrogation à distance, mais peut également être applicable à des dispositifs connectés en parallèle et interrogés par voie filaire, et donc s'appliquer à tous les substrats piézoélectriques habituellement utilisés pour les capteurs et plus généralement les dispositifs à ondes élastiques.

## Revendications

1. Procédé d'interrogation d'un capteur de type acoustique à ondes de surface réalisant une mesure d'au moins un paramètre physique, **caractérisé en ce qu'**il comprend :
- une première étape (101) de génération et d'émission d'un signal électromagnétique correspondant au retournement temporel dilaté temporellement d'un coefficient de dilatation k, d'une signature en réponse impulsionnelle caractéristique dudit capteur acoustique correspondant au signal reçu du capteur en écho à un signal déterminé de type impulsionnel,
- une deuxième étape (102) de recueil d'un signal reçu en écho du signal émis lors de la première étape (101),
- une troisième étape (103) de détermination de la valeur maximale de l'amplitude ou de la puissance dudit signal reçu en écho lors de la deuxième étape (102),
- ladite première étape (101) étant appliquée en une nouvelle itération avec un coefficient de dilatation k augmenté ou diminué d'un pas de valeur déterminée, jusqu'à ce que ladite valeur maximale atteigne une valeur maximale,
la mesure dudit au moins un paramètre physique étant alors déterminée par le coefficient de dilatation k pour lequel la valeur maximale est maximale, et un coefficient dudit paramètre physique du retard de propagation des ondes de surface caractéristique dudit capteur acoustique.

2. Procédé d'interrogation suivant la revendication 1, **caractérisé en ce que** le coefficient de dilatation k est varié sur toute la gamme correspondant aux valeurs du paramètre physique à mesurer, la valeur maximale en fonction du coefficient de dilatation k de la valeur maximale de l'amplitude ou de la puissance dudit signal reçu en écho étant déterminée à partir de toutes les valeurs recueillies sur la gamme des valeurs du coefficient de dilatation k.

3. Procédé d'interrogation suivant la revendication 1, **caractérisé en ce que** la valeur maximale de la valeur maximale de l'amplitude ou de la puissance dudit signal reçu en écho est déterminée pour le coefficient de dilatation k correspondant à une itération pour laquelle le taux de variation de la valeur maximale de l'amplitude ou de la puissance du signal reçu en écho entre ladite itération et l'itération précédente est de signe opposé au taux de variation de la valeur maximale de l'amplitude ou de la puissance du signal reçu en écho entre ladite itération précédente et l'itération la précédant.

4. Procédé suivant l'une quelconque des revendications précédentes, **caractérisé en ce qu'**il est réalisé pour toutes les signatures en réponse impulsionnelle d'un ensemble de capteurs acoustiques connus, de sorte qu'une identification des capteurs acoustiques présents puisse être réalisée, un capteur acoustique étant identifié lorsque la valeur maximale normalisée de l'amplitude ou de la puissance du signal reçu en écho lors de la deuxième étape (102) est supérieure à une valeur de seuil prédéterminée.

5. Procédé suivant la revendication 4, **caractérisé en ce qu'**il comprend en outre une première étape préalable de recueil du signal en réponse à un signal d'émission déterminé, et une seconde étape préalable d'analyse du signal recueilli permettant l'identification d'un ou plusieurs capteurs acoustiques, ledit procédé étant alors réalisé pour les signatures en réponse impulsionnelle des capteurs acoustiques connus ainsi identifiés lors de ladite seconde étape préalable d'analyse du signal recueilli.

6. Procédé suivant l'une quelconque des revendications précédentes, **caractérisé en ce qu'**il comprend en outre une étape préalable (300) d'élaboration d'une base de données (200) de capteurs acoustiques, consistant à collecter pour l'ensemble des capteurs acoustiques connus aptes à être interrogés, et pour une valeur déterminée d'au moins un paramètre physique, la caractéristique du signal émis par lesdits capteurs acoustiques en réponse à un signal déterminé de type impulsionnel.

7. Procédé suivant l'une quelconque des revendications 4 à 6, dans lequel ladite valeur de seuil prédéterminée est une valeur supérieure à 70%.

8. Dispositif d'interrogation (40) d'au moins un capteur de type acoustique à ondes de surface (41, 43), **caractérisé en ce qu'**il met en oeuvre un procédé selon l'une quelconque des revendications précédentes, ledit dispositif d'interrogation (40) comprenant :
• une antenne d'émission (401) reliée à un module de mise en forme des signaux radiofréquence (403) relié à un synthétiseur de signaux radiofréquence (405) assurant la mise en oeuvre de ladite première étape (101),
• une antenne de réception (402) reliée à un module d'amplification et de filtrage (404), mettant en oeuvre ladite deuxième étape (102), l'augmentation ou la diminution du coefficient de dilatation temporelle d'un pas déterminé jusqu'à ce que ladite valeur maximale de l'amplitude ou de la puissance retournée atteigne une valeur maximale pour une valeur du coefficient de dilatation k optimale, le module d'amplification et de filtrage (404) étant relié à un module d'analyse radiofréquence (406) mettant en oeuvre ladite troisième étape (103) et déterminant ladite mesure dudit au moins un paramètre physique à partir du coefficient de dilatation k pour lequel la valeur maximale est maximale, et un coefficient dudit paramètre physique du retard de propagation des ondes de surface caractéristique dudit capteur acoustique.

## Patentansprüche

1. Verfahren zum Abfragen eines akustischen Oberflächenwellensensors, der eine Messung von wenigstens einem physikalischen Parameter durchführt, **dadurch gekennzeichnet, dass** es Folgendes beinhaltet:
einen ersten Schritt (101) des Erzeugens und Aussendens eines elektromagnetischen Signals, das der zeitlich ausgedehnten zeitlichen Umkehr eines Dilatationskoeffizienten k entspricht, einer charakteristischen Impulsantwort-Signatur des akustischen Sensors, entsprechend dem empfangenen Signal des Sensors als Echo auf ein bestimmtes Signal des Impulstyps,
einen zweiten Schritt (102) des Sammelns eines Signals, das als Echo des im ersten Schritt (101) ausgesendeten Signals empfangen wurde,
einen dritten Schritt (103) des Ermitteins des Maximalwertes der Amplitude oder der Leistung des im zweiten Schritt (102) als Echo empfangenen Signals,
wobei der erste Schritt (101) in einer neuen Iteration mit einem Dilatationskoeffizienten k angewandt wird, der um ein bestimmtes Werteinkrement erhöht oder verringern ist, bis der Maximalwert einen Maximalwert erreicht,
wobei der Messwert des wenigstens einen physikalischen Parameters dann durch den Dilatationskoeffizienten k, für den der Maximalwert maximal ist, und einen Koeffizienten des physikalischen Parameters der Ausbreitungsverzögerung der Oberflächenwellen bestimmt wird, die für den akustischen Sensor charakteristisch ist.

2. Abfrageverfahren nach Anspruch 1, **dadurch gekennzeichnet, dass** der Dilatationskoeffizient k über den gesamten den Werten des zu messenden physikalischen Parameters entsprechenden Bereich variiert wird, wobei der Maximalwert in Abhängigkeit vom Dilatationskoeffizienten k des Maximalwerts der Amplitude oder der Leistung des als Echo empfangenen Signals auf der Basis aller gesammelten Werte über den Bereich der Werte des Dilatationskoeffizienten k bestimmt wird.

3. Abfrageverfahren nach Anspruch 1, **dadurch gekennzeichnet, dass** der Maximalwert des Maximalwerts der Amplitude oder der Leistung des als Echo empfangenen Signals für den Dilatationskoeffizienten k entsprechend einer Iteration bestimmt wird, für die die Variationsrate des Maximalwerts der Amplitude oder der Leistung des als Echo empfangenen Signals zwischen der Iteration und der vorhergehenden Iteration vom entgegengesetzten Vorzeichen zur Variationsrate des Maximalwerts der Amplitude oder der Leistung des als Echo empfangenen Signals zwischen der vorherigen Iteration und der dieser vorangehenden Iteration ist.

4. Verfahren nach einem der vorherigen Ansprüche, **dadurch gekennzeichnet, dass** es für alle Impulsantwort-Signaturen einer Gruppe von bekannten akustischen Sensoren ausgeführt wird, so dass die vorhandenen akustischen Sensoren identifiziert werden können, wobei ein akustischer Sensor identifiziert wird, wenn der normalisierte Maximalwert der Amplitude oder der Leistung des im zweiten Schritt (102) als Echo empfangenen Signals größer ist als ein vorbestimmter Schwellenwert.

5. Verfahren nach Anspruch 4, **dadurch gekennzeichnet, dass** es ferner einen ersten Vorabschritt des Sammelns des Signals als Reaktion auf ein bestimmtes Sendesignal und einen zweiten Vorabschritt des Analysierens des gesammelten Signals beinhaltet, so dass ein oder mehrere akustische Sensoren identifiziert werden können, wobei das Verfahren dann für die Impulsantwort-Signaturen der bekannten akustischen Sensoren ausgeführt wird, die so im zweiten Vorabschritt des Analysierens des gesammelten Signals identifiziert wurden.

6. Verfahren nach einem der vorherigen Ansprüche, **dadurch gekennzeichnet, dass** es ferner einen Vorabschritt (300) des Erstellens einer Datenbank (200) von akustischen Sensoren beinhaltet, bestehend im Kollektieren, für den Satz von bekannten abfragbaren akustischen Sensoren und für einen bestimmten Wert von wenigstens einem physikalischen Parameter, der Charakteristik des Signals, das von den akustischen Sensoren als Reaktion auf ein bestimmtes Signal des Impulstyps ausgesendet wurde.

7. Verfahren nach einem der Ansprüche 4 bis 6, bei dem der vorbestimmte Schwellenwert ein Wert größer als 70 % ist.

8. Vorrichtung (40) zum Abfragen von wenigstens einem akustischen Oberflächenwellensensor (41, 43), **dadurch gekennzeichnet, dass** sie ein Verfahren nach einem der vorherigen Ansprüche ausführt, wobei die Abfragevoruchtung (40) Folgendes umfasst:
eine Sendeantenne (401), die mit einem Radiofrequenzsignalformungsmodul (403) verbunden ist, das mit einem Radiofrequenzsignalsynthetisierer (405) verbunden ist, der die Ausführung des ersten Schrittes (101) gewährleistet,
eine Empfangsantenne (402), die mit einem Verstärkungs- und Filterungsmodul (404) verbunden ist, das den zweiten Schritt (102) ausführt, das Erhöhen oder das Verringern des zeitlichen Dilatationskoeffizienten um ein bestimmtes Inkrement, bis dieser Maximalwert der Amplitude oder der zurückgeführten Leistung einen Maximalwert für einen Optimalwert des Dilatationskoeffizienten k erreicht, wobei das Verstärkungs- und Filterungsmodul (404) mit einem Radiofrequenzanalysemodul (406) verbunden ist, das den dritten Schritt (103) ausführt und den Messwert des wenigstens einen physikalischen Parameters auf der Basis des Dilatationskoeffizienten k, für den der Maximalwert maximal ist, und einen Koeffizienten des physikalischen Parameters der charakteristischen Oberflächenwellenausbreitungsverzögerung des akustischen Sensors bestimmt.

## Claims

1. A method of interrogating a sensor of the surface acoustic wave type that measures at least one physical parameter, **characterised in that** it comprises:
a first step (101) of generating and emitting an electromagnetic signal corresponding to the time reversal temporally dilated by a dilation coefficient k of a pulse response signature that is characteristic of said acoustic sensor, corresponding to the signal received from said sensor as an echo to a determined signal of the pulse type;
a second step (102) of gathering a signal received as an echo of the signal emitted during said first step (101);
a third step (103) of determining the maximum value of the amplitude or of the power of said signal received as an echo during said second step (102);
said first step (101) being applied as a new iteration with a dilation coefficient k that is increased or reduced by a step of a determined value, until said maximum value reaches a maximum value,
the measurement of said at least one physical parameter then being determined by the dilation coefficient k, for which the maximum value is maximum, and a coefficient of said physical parameter of the propagation delay of the surface waves that is characteristic of said acoustic sensor.

2. The interrogation method according to claim 1, **characterised in that** the dilation coefficient k is varied over the entire range that corresponds to the values of the physical parameter to be measured, with the maximum value as a function of the dilation coefficient k of the maximum value of the amplitude or of the power of said signal received as an echo being determined on the basis of all of the values gathered over the range of values of the dilation coefficient k.

3. The interrogation method according to claim 1, **characterised in that** the maximum value of the maximum value of the amplitude or of the power of said signal received as an echo is determined for the dilation coefficient k that corresponds to an iteration for which the rate of variation of the maximum value of the amplitude or of the power of the signal received as an echo between said iteration and the preceding iteration is of opposite sign to the rate of variation of the maximum value of the amplitude or of the power of the signal received as an echo between said preceding iteration and the iteration preceding said preceding iteration.

4. The method according to any one of the preceding claims, **characterised in that** it is carried out for all of the pulse response signatures of a set of known acoustic sensors, so that an identification of the acoustic sensors that are present can be carried out, with an acoustic sensor being identified when the normalised maximum value of the amplitude or of the power of the signal received as an echo during the second step (102) is greater than a predetermined threshold value.

5. The method according to claim 4, **characterised in that** it further comprises a first preliminary step of gathering the signal in response to a determined emission signal and a second preliminary step of analysing the gathered signal allowing the identification of one or more acoustic sensors, said method then being carried out for the pulse response signatures of the known acoustic sensors thus identified during said second preliminary step of analysing the gathered signal.

6. The method according to any one of the preceding claims, **characterised in that** it further comprises a preliminary step (300) of compiling a database (200) of acoustic sensors, involving collecting, for all of the known acoustic sensors that can be interrogated and for a determined value of at least one physical parameter, the characteristic of the signal emitted by said acoustic sensors in response to a determined signal of the pulse type.

7. The method according to any one of claims 4 to 6, wherein said predetermined threshold value is a value of more than 70%.

8. A device (40) for interrogating at least one sensor of the surface acoustic wave type (41, 43), **characterised in that** it implements a method according to any one of the preceding claims, said interrogation device (40) comprising:
an emission antenna (401) connected to a radiofrequency signal shaping module (403) connected to a radiofrequency signal synthesiser (405) ensuring the implementation of said first step (101);
a reception antenna (402) connected to an amplification and filtering module (404), implementing said second step (102), increasing or reducing the temporal dilation coefficient by a determined step until said maximum value of the amplitude or of the returned power reaches a maximum value for an optimal value of the dilation coefficient k, said amplification and filtering module (404) being connected to a radiofrequency analysis module (406) implementing said third step (103) and determining said measurement of said at least one physical parameter on the basis of said dilation coefficient k, for which the maximum value is maximum, and a coefficient of said physical parameter of the propagation delay of the surface waves that is characteristic of said acoustic sensor.
